# EUROPEAN PATENT APPLICATION

(11) **EP 2 051 196 A1**
(43) Date of publication of application: **22.04.2009**
(21) Application number: 08252747.4
(22) Date of filing: 19.08.2008
(51) Int. Cl.: G06Q 10/00

(54) **Action management system and action management method**

(30) Priority: 15.10.2007 JP 2007267347
(71) Applicant: Hitachi, Ltd., Chiyoda-ku Tokyo (JP)
(72) Inventor: Furukawa, Naohiro, Chiyoda-ku Tokyo 100-8220 (JP); Ikeda, Hisashi, Chiyoda-ku Tokyo 100-8220 (JP); Konsihi, Kosuke, Tokyo (JP); Sato, Koichi, Chiyoda-ku Tokyo 100-8220 (JP)
(74) Representative: Calderbank, Thomas Roger

(57) **Abstract**

A system and a method of managing the action on an electronic document and a paper document are disclosed. The action management system includes a procedure definition information data base (207) for holding the procedure definition specifying the condition for a string of actions constituting the procedure, a procedure matching part (102) for extracting the string of actions coincident with the condition for the procedure definition from the actions managed by the action management system, and a hypothesis information data base (208) for holding the procedure obtained by the procedure matching part and the hypothesis of the action constituting the procedure. The action management system extracts a typical action and a candidate for a non-typical action related to the typical action.

## Description

This invention relates to a system and a method for managing the action on electronic documents and paper documents.

Electronic documents and paper documents are used in various procedures such as the accounting process, sales activities and the personnel matters. These procedures are configured of a series of actions including the creation, reading, editing and deletion of electronic documents and paper documents by the user. In order to confirm that the accounting procedure flow is observed in the internal control and auditing and to analyze the sales activities from quantitative and qualitative viewpoints for the customer relation management (CRM), the accumulation of the user actions on the electronic documents and paper documents has increasingly become important.

With the progress of the electronic technologies, the work flow and the electronic application utilizing electronic documents have spread widely. The user can carry out the actions such as reading and editing the electronic documents on an information terminal including a computer with a display and a keyboard. The history of actions including the reading and editing of the electronic documents performed on the terminal by the user in respect of the information such as the date and time and the name of the user who has carried out the actions and the contents changed by the key punch can now be electronically recorded.

On the other hand, local governments and offices in general still use paper documents. The probable reason is that paper has many advantages: (1) the cost is low, (2) easy to write on, (3) several sheets of paper can be accessed at the same time, (4) the navigation by the "turn over" action is possible.

As a means of computerizing the information written in paper documents, a pen-type input device (digital pen) for electronically acquiring the trajectory of the pen point on the surface of the paper sheet has come to find practical application. The digital pen developed by Anoto of Sweden is an example. The detail of this digital pen is disclosed in WO01/71473. The advantage of the digital pen lies in that even the user not accustomed to the keyboard or mouse can use it easily. The digital pen is thus applicable in many fields including the document management in general offices as well as applications filed at windows of local governments. The development of these input devices has facilitated the computerization of the information written in paper documents.

As a technique for extracting a string of actions intended for a given purpose from a mass of actions on a vast amount of accumulated documents, on the other hand, the conventional technique disclosed, for example, in JP-A-2000-172696 is available. According to this conventional technique, an action on electronic documents for a short time length is regarded as an action related to a specified work, and an action string is created for each user. Further, judging the analogy between action strings, highly analogous action strings are coupled to each other to create an action string in a longer time range.

The conventional technique is intended to discover analogous ones of action strings involved or to cluster the action strings, and poses the problem that it is difficult to confirm whether the procedure flow is observed as required for supporting the internal control or auditing. Specifically, assuming that a string of actions (typical actions) making up a certain procedure is specified according to a certain rule, it is difficult to readily find out the particular action string and to confirm whether each action is carried out by an authorized user with a right document at correct timing.

On the other hand, a given typical action may be accompanied by an action (related action) such as the preparation or reference to carry out the particular typical action. The browsing of receipts written in paper and the calculation using an electronic document in spreadsheet software for the totalization in an accounting work are some examples of the related action. Another related action is for a sales person to note the complementary information in a commodity pamphlet as a part of sales activities before a typical action of a customer filling out a written agreement on the particular commodity. These related actions, unlike a typical action, may vary in accordance with the situation of the user involved or his/her work procedure, and therefore, often constitute non-typical actions difficult to specify in advance under a definite rule. The difficulty of extracting these non-typical related actions is another problem of the conventional technique.

This invention has been achieved in view of these problems.

Accordingly, a first preferred aim of the invention is to provide a typical action extraction method for extracting a string of actions constituting a procedure from the record of accumulated actions.

A second preferred aim of the invention is to provide a related action candidate extraction method for extracting a candidate for a non-typical action related to an extracted typical action.

Representative aspects of this invention disclosed in the present application to solve the problems mentioned above are described below.

According to a first aspect of the invention, there is provided a system for extracting a typical action, comprising an action management server for acquiring and managing the user actions on a document:
wherein the action management server includes;
an action information data base for storing the information on the actions carried out on the document,
a procedure definition data base for storing, for each specified procedure, the actions constituting the specified procedure,
an action definition data base for storing the information on the actions constituting the procedure in the procedure definition data base,
a procedure matching part for creating an action hypothesis for an action in the action information data base satisfying the definition based on the information stored in the action definition data base, and extracting the procedure including the created action hypothesis from the procedure definition data base thereby to create a procedure hypothesis, and
a procedure hypothesis data base for storing the procedure hypothesis created by the procedure matching part.

According to a second aspect of the invention, there is provided an action management system in the first aspect for extracting a candidate for a non-typical action related to the typical action:
wherein the action management server includes a related action search part to search the action information data base for an action which is related to the hypothesis of the action constituting the procedure extracted by the procedure matching part and which is an action by the same user, an action on the same document or an action on an analogous document.

According to this invention, the auditor, for example, can confirm that the procedure flow is observed on the one hand, and the presentation of the related action can promote a more accurate and deeper auditing work on the other hand.

Also, an adviser in charge of improving the intra-company business efficiency is given an environment to easily analyze the contents of his/her business both qualitatively and quantitatively.

The technique according to this invention can be utilized to confirm the observance of the procedure flow for various procedures using the electronic or paper documents, and therefore, is expected to find application to the internal control system or the auditing support system. Also, in view of the fact that this invention facilitates the browsing of the non-typical actions related to the action constituting the procedure flow, the application to the procedure improvement system is expected for improving the efficiency of the procedure flow by the qualitative and quantitative analysis of the non-typical related actions.

Other objects, features and advantages of the invention will become apparent from the following description of the embodiments of the invention taken in conjunction with the accompanying drawings.

### IN THE DRAWINGS

Fig. 1 is a diagram showing the configuration of an action management system according to this invention.

Fig. 2 is a diagram showing the configuration of an information management part according to the invention.

Figs. 3A and 3B are diagrams showing the data structure of the user information.

Figs. 4A and 4B are diagrams sowing the data structure of the electronic document information.

Fig. 5 is a diagram showing the data structure of the paper document information.

Fig. 6 is a diagram showing the data structure of the stroke information.

Figs. 7A to 7C are diagrams showing the data structure of the action information.

Figs. 8A to 8D are diagrams showing the data structure of the procedure definition information and the action definition information.

Figs. 9A to 9C are diagrams showing the data structure of the procedure hypothesis information and the action hypothesis information.

Fig. 10 is a diagram showing an example of the relation between the procedure and the action.

Fig. 11 is a diagram showing an example of the action constituting a procedure and an action related thereto.

Fig. 12 is a flowchart showing the process of creating the procedure hypothesis.

Fig. 13 is a diagram showing the relation between an action, the action hypothesis and the procedure hypothesis.

Fig. 14 is a flowchart showing the process of searching for the related action.

Fig. 15 is a diagram showing an example of the method of presenting the result of search for the related action.

Fig. 16 is a diagram showing an example of the relation between the procedure and the action.

Fig. 17 is a diagram showing an interface to search for the related action.

First, the system configuration and the data structure are explained. Next, each process is explained in detail with reference to specific examples of the procedure, the typical action and the non-typical action.

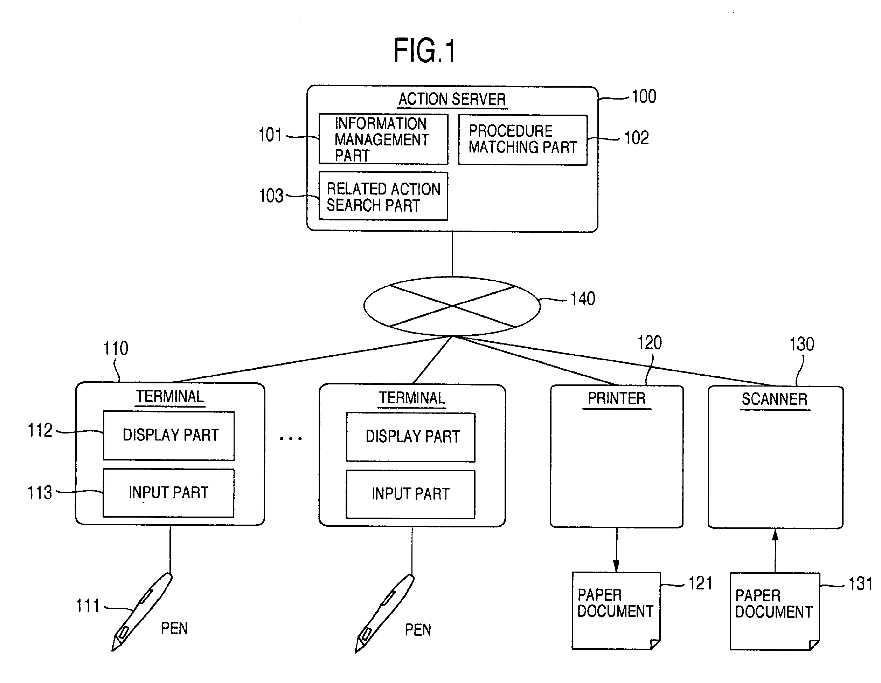

The action management system according to the invention is configured of the parts shown in Fig. 1. An action server 100 for managing the information of the whole system and one or plural terminals 110 are connected to each other through a network 140. Also, a printer 120 for printing the contents of an electronic document into a paper document is also connected to the network 140 and prints out a paper document 121 at the request of the user. A scanner 130 fetches the image on the paper document 131 electronically and creates a corresponding electronic document in the action server.

The action server 100 includes an information management part 101 for managing various information, a procedure matching part 102 and a related action search part for extracting a candidate for an action related to an intended action from the accumulated actions.

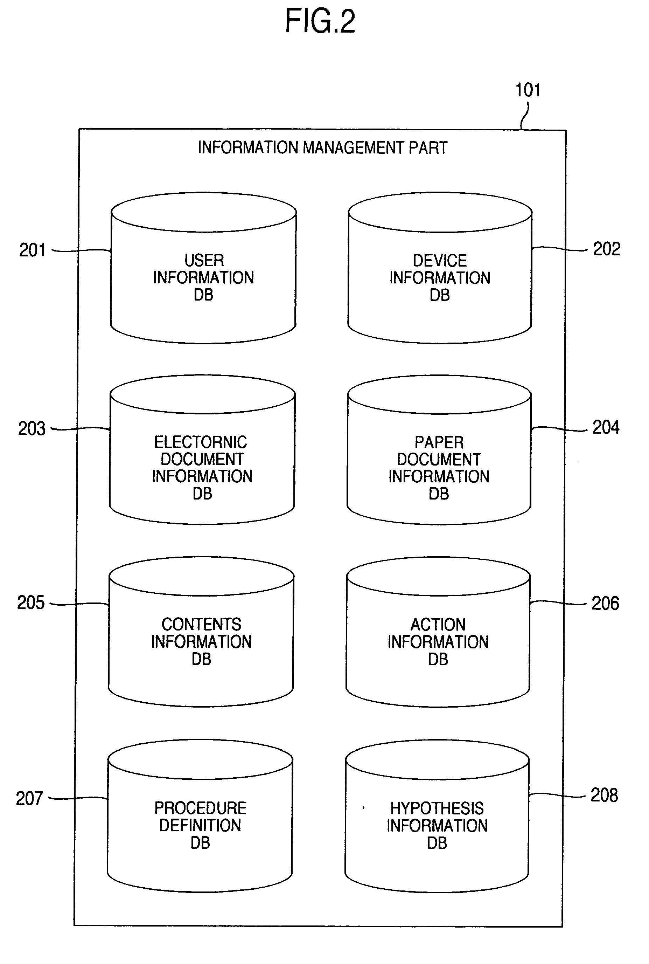

The information management part 101 of the action server 100 manages the data bases of actions, documents and users as described below (Fig. 2). Specifically, they include a user information DB 201 for managing the information on users, a device information DB 202 for managing the terminals, the printer, the scanner and the digital pen, an electronic document information DB 203 for managing the information on electronic documents, a paper document information DB 204 for managing the information on paper documents, a contents information DB 205 for managing the contents of the electronic documents edited and the stroke information written in the paper documents by the digital pen, an action information DB 206 for managing the user action on electronic documents and paper documents, a procedure definition information DB 207 for specifying the procedure and the conditions for a typical action making up the procedure, and a hypothesis information DB 208 for managing the action hypothesis information interpreted as a typical action from the action information DB and the procedure hypothesis information interpreted from the action hypothesis.

Each terminal 110 includes a digital pen 111 for writing into a paper document, a display part 112 for browsing an electronic document or confirming the result of a print request, and an input part 113 for receiving the user operation such as the editing of an electronic document or a print request through the keyboard or mouse. Also, according to this embodiment, the digital pen disclosed in WO01/71473 is used as a means for acquiring the handwriting of the user. Nevertheless, another means or a set of several means capable of acquiring a paper individual ID and a handwriting stroke may alternatively be used. For example, a means for printing a bar code meaning the paper individual ID on paper and reading by scanning it thereby to acquire the paper individual ID may be combined with a means including a tablet device arranged under the paper for capturing the stroke noted by the user on the paper surface thereby to acquire the paper individual ID and the handwriting stroke. According to this embodiment, a digital pen is used as an example with which the user can acquire the paper individual ID and the handwriting stroke simultaneously simply by writing in the paper.

Although this embodiment is explained with reference to a server-client configuration in which the action server is connected with one or plural terminals, a substantially equivalent process can be achieved by a stand-alone configuration with a server and a client constructed as a single unit. Also, part of the information managed at the managing parts of the action server may alternatively be managed by the terminals.

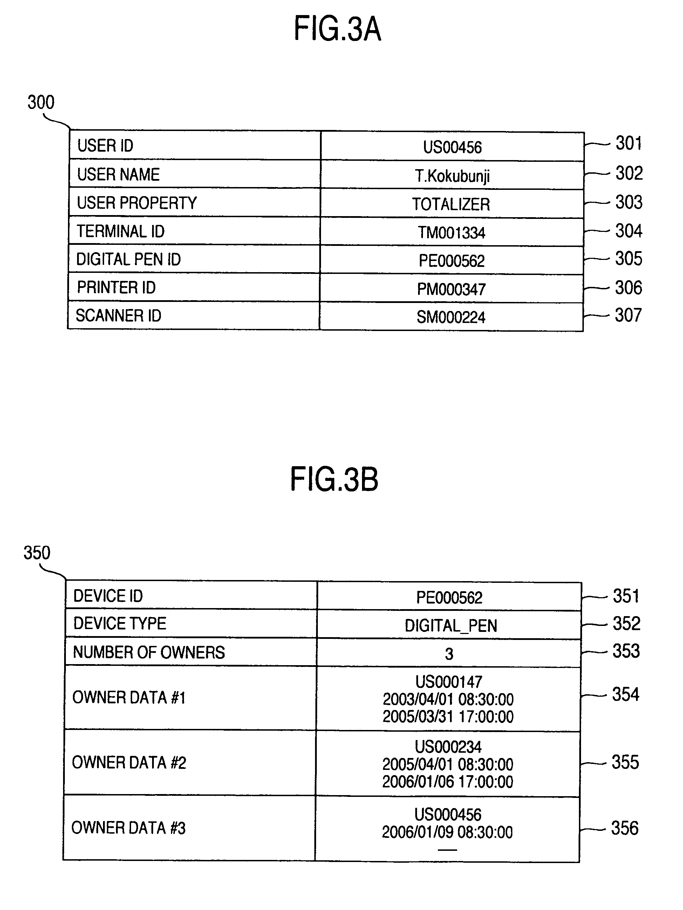

Next, the data structure is explained. An example of the user information stored in the user information DB 201 is shown in Fig. 3A as designated by numeral 300. The user information 300 contains a user ID 301, a user name 302, a user property 303 such as an approver or a totalizer, a user terminal ID 304, a digital pen ID 305, a printer ID 306 and a scanner ID 307.

An example of the device information stored in the device information DB 202 is shown in Fig. 3B as designated by numeral 350. The device information 350 contains a device ID 351, a device type 352 and the previous owner information quantity 353. Each time the owner-user is changed, the owner-user data (354 to 356) are added. The owner-user data recorded contains the owner-user ID and the period during which the user owns the device. Even in the case where the owner-user of the device is changed, the correct owner-user for the past actions can be clarified by holding the past owner-user information in the device information.

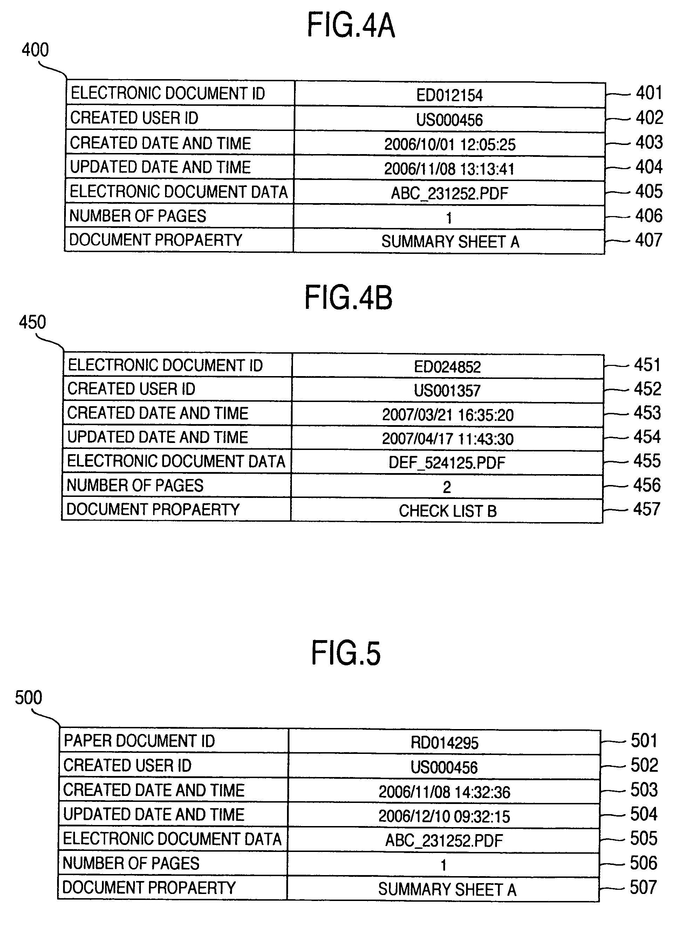

An example of the electronic document information stored in the electronic document information DB 203 is shown in Figs. 4A and 4B as designated by numerals 400, 450. The electronic document information 400 contains an electronic document ID 401, an ID 404 of the user who has created the particular electronic document, the date and timer 403 when the electronic document is created, the date and time 404 indicating the latest time when the electronic document is updated, the electronic document contents 405, the total number of pages 406 and the document property 407 indicating the type of the electronic document, etc. According to this embodiment, the contents of the electronic document are expressed in PDF format and the file name thereof is stored in the electronic document data 405.

An example of the paper document information stored in the paper document information DB 204 is shown in Fig. 5 as designated by numeral 500. The paper document information 500, like the electronic document described above, has stored therein a paper document ID 501, the ID 502 of the user who has created the paper document, the date and time 503 when the paper document is created, the date and time 504 indicating the latest time when the paper document is updated, the paper document contents 505, the total number of pages 506 and the document property 507 indicating the type, etc. of the particular paper document. According to this embodiment, the contents of the paper document are expressed in PDF format, and the file name thereof is stored in the paper document data 505.

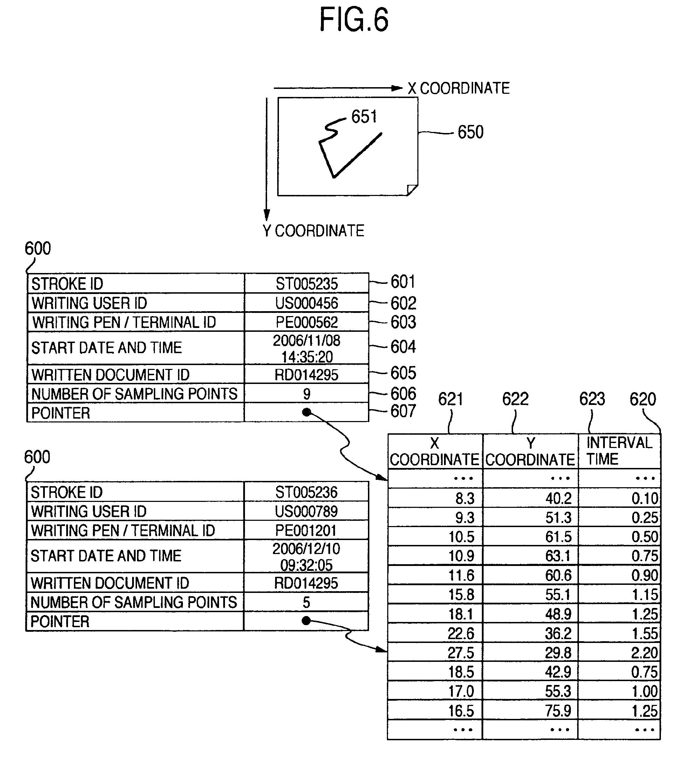

An example of the stroke information stored in the contents information DB 205 is shown in Fig. 6. The stroke 651 on the document 650 in Fig. 6 is expressed by the information described in items 601 to 606. Item 601 is an ID for identifying the particular stroke. Item 602 is an ID of the user who has written the stroke, and item 603 an ID of the terminal or the pen used for writing. Item 604 indicates the stroke write start time. Item 605 is an ID of the document in which the stroke is actually written. Item 606 is the number of sampling points existing in the stroke. The information on each sampling point is held in a table 620, and item 607 indicates a pointer of the head of the mass of the sampling points for the particular stroke. Each sampling point has X and Y coordinate values 621, 622 on the document, and the interval time between the sampling point write time and the stroke write start time described in item 604 is held in column 623. Also for each of the remaining strokes, the information on the data structure as shown in Table 610 is held. Even in the case where a handwritten letter is input by an input unit other than the digital pen, the letter is decomposed by stroke, so that the stroke information can be managed using the stroke ID, the number of sampling points, the pointer and the table 620 holding the coordinates.

The contents information other than the stroke include the editing contents of the electronic document. In this case, a table is prepared in which the pointer in item 607 of the stroke information table 600 is replaced by the character string actually edited through the keyboard, etc.

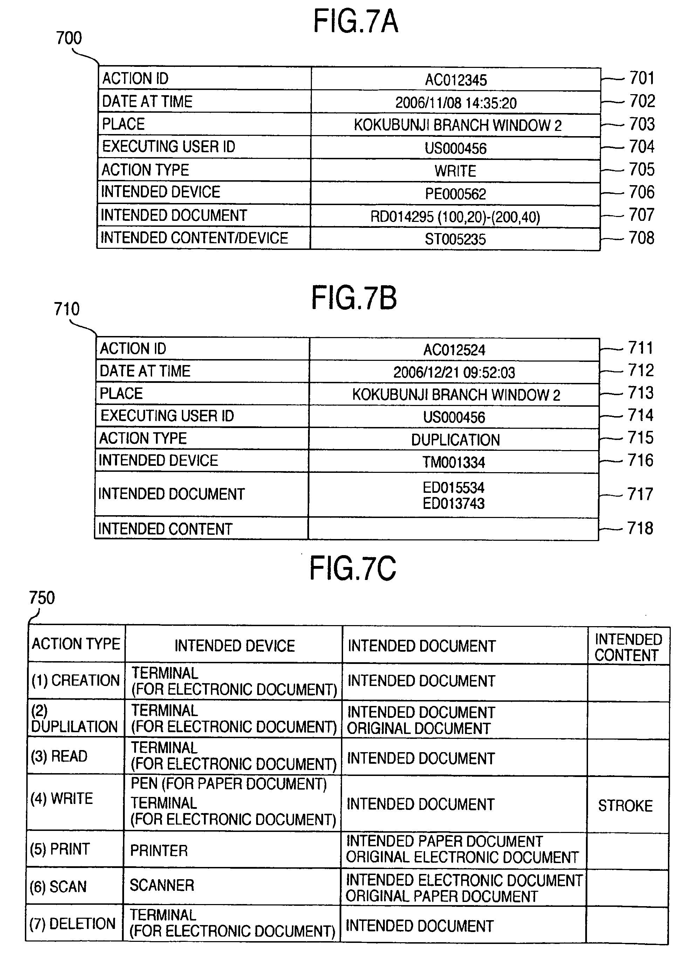

An example of the action information stored in the action information DB 206 is shown in Fig. 7A as designated by numeral 700. The action information 700 has stored therein an action ID 701, the date and time 702 and the place 703 at which the action is conducted, an ID 704 of the user who has conducted the action, the action type 705, the device 706 that has executed the action, a document 707 intended for by the action and the contents 708 of the action.

Seven representative action types according to this embodiment are shown in Table 750. The intended device, the intended document and the intended contents are set in accordance with the respective types of the action. In the case of "write" in the action information 700, for example, the ID of the pen used for write operation is set as the intended device 706, the ID and the range of the document written in as the intended document 707, and the ID of the stroke written in as the intended content 708. In the case of "duplicate" in the action information 710, on the other hand, the ID of the terminal operated for document duplication is set as the intended device, and the IDs of the duplicated document and the original document as the intended document 717. Now, the relation between the action information DB 206, the user information DB 201, the device information DB 202, the electronic document information DB 203, the paper document information DB 204 and the contents information DB 205 is described. As apparent from each item of the action information, each action information in the action information DB is set in correspondence with the information in the user information DB (executing user ID), the device information DB (intended device), the electronic document information DB or the paper document information DB (intended document) and the contents information DB (intended contents).

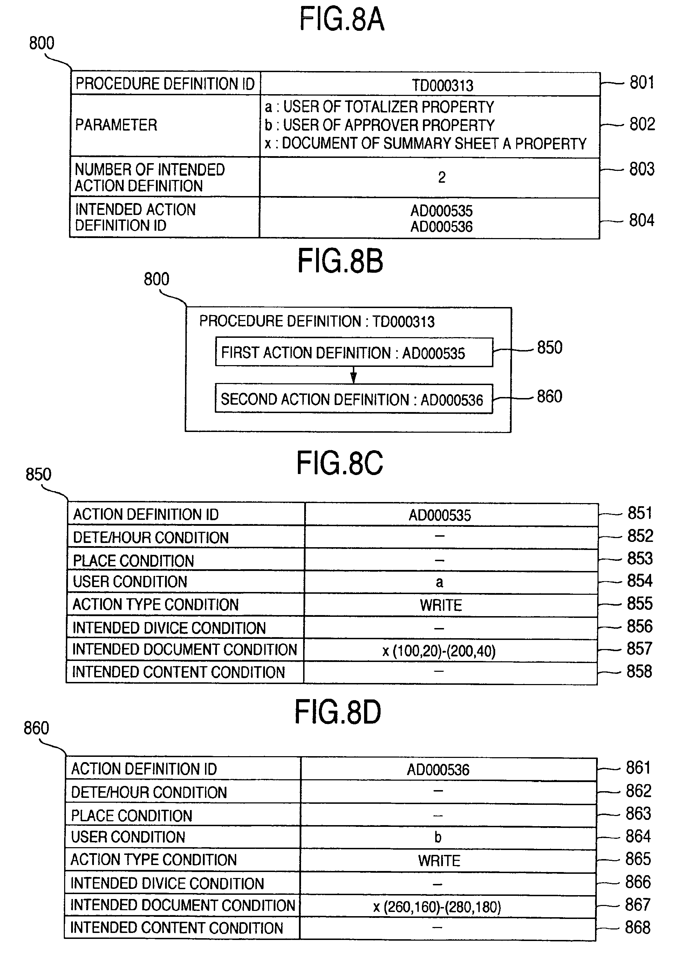

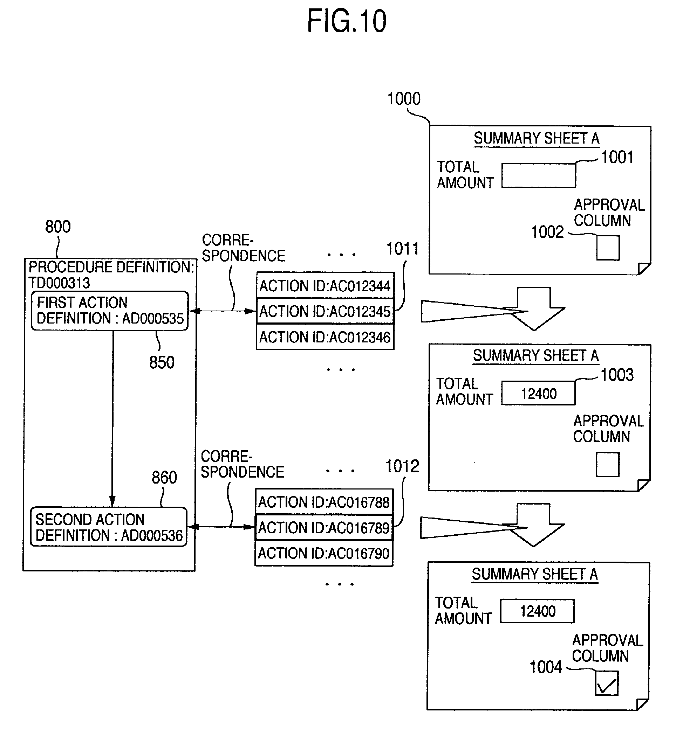

An example of the procedure definition information stored in the procedure definition information 207 is shown in Figs. 8A and 8B as designated by numeral 800, and an example of the action definition information by numeral 850 in Fig. 8C and numeral 860 in Fig. 8D. This example assumes a certain accounting procedure with the procedure definition information 800 in which the totalizer first fills the total amount in the total amount item column 1001 of the summary sheet A (voucher 1000 in Fig. 10) (action definition 850), and the approver approves the amount by checking the approval column 1002 (action definition 860).

The procedure definition information 800 has stored therein the procedure definition ID 801, the parameter 802 indicating the user or document appearing in the procedure, the number 800 of the actions constituting the procedure and the corresponding action definition ID string 804.

The action definition information 850 has stored therein the action definition ID 851, the date and time condition 852, the place condition 853, the condition 854 of the user that has conducted the action, the action type condition 855, the condition 856 of the device and the condition 857 of the document intended for the action, and the condition 858 of the contents of the action. In the action definition according to this embodiment, the hyphen is substituted into the item of no question as a condition. This is also the case with the action definition information 860.

The procedure definition information and the action definition information are created in advance by the manager, etc. and stored in the procedure definition information DB. Also, depending on the operation policy, each user may create the procedure definition and the action definition independently for the purpose of analyzing his/her history, etc.

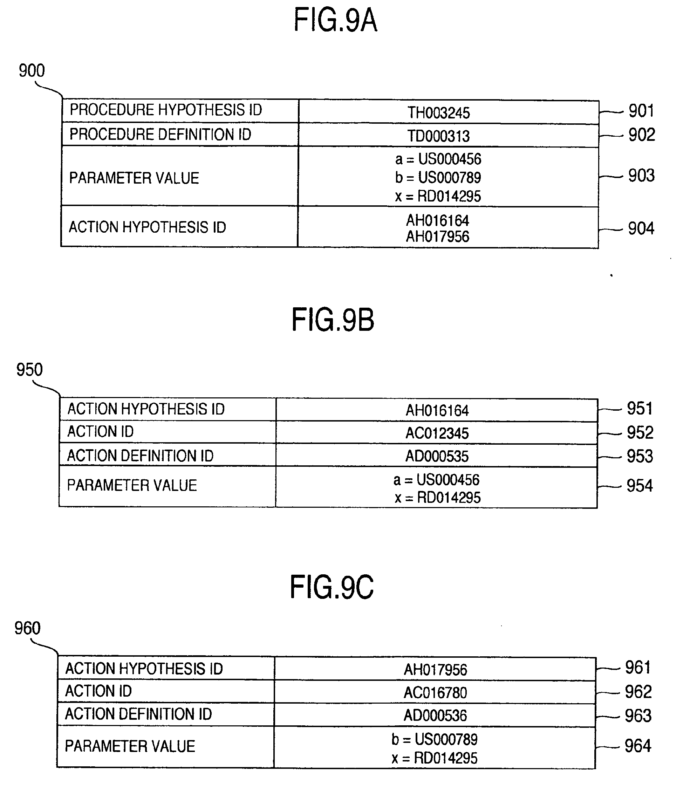

An example of the procedure hypothesis information stored in the procedure hypothesis information DB stored in the hypothesis information 208 is shown in Fig. 9A as designated by numeral 900, and an example of the action hypothesis information by numeral 950 in Fig. 9B and numeral 960 in Fig. 9C.

The procedure hypothesis information 900 has stored therein the procedure hypothesis ID 901 with the corresponding procedure definition ID 901, the value 903 obtained as the parameter indicating the user and the document appearing in the procedure, and the ID string 904 of the action hypothesis making up the procedure hypothesis.

The action hypothesis information 950 has stored therein the action hypothesis ID 951, the corresponding action ID 952, the action definition ID 953, the parameter value 904 indicating the user and the document appearing in the action.

Now, the relation between the hypothesis information DB 208 and the DBs 201 to 207 in the information management part 101 is explained. Each action hypothesis information in the hypothesis information DB, the action information (corresponding action ID) in the action information DB and the action definition information (corresponding action definition ID) in the procedure definition information DB are set in correspondence with each other. Also, each procedure hypothesis information in the hypothesis information DB and the procedure definition information (corresponding procedure definition ID) in the procedure definition information DB are set in correspondence with each other.

An example of the procedure used in the explanation of this embodiment is shown in Fig. 10. With regard to an accounting procedure using the voucher 1000 specified by the procedure definition 800, the totalizer first notes the total amount 1003 in the total amount item column 1001 of the summary sheet A (action ID: AC012345), after which the approver approves the amount and notes a check mark 1004 in the approval column 1002 (action ID: AC016789). In the process, the action ID AC012345 corresponds to the first action definition AD000535 and the action ID AC016789 to the second action definition AD000536 as determined from the procedure hypothesis creation method described later.

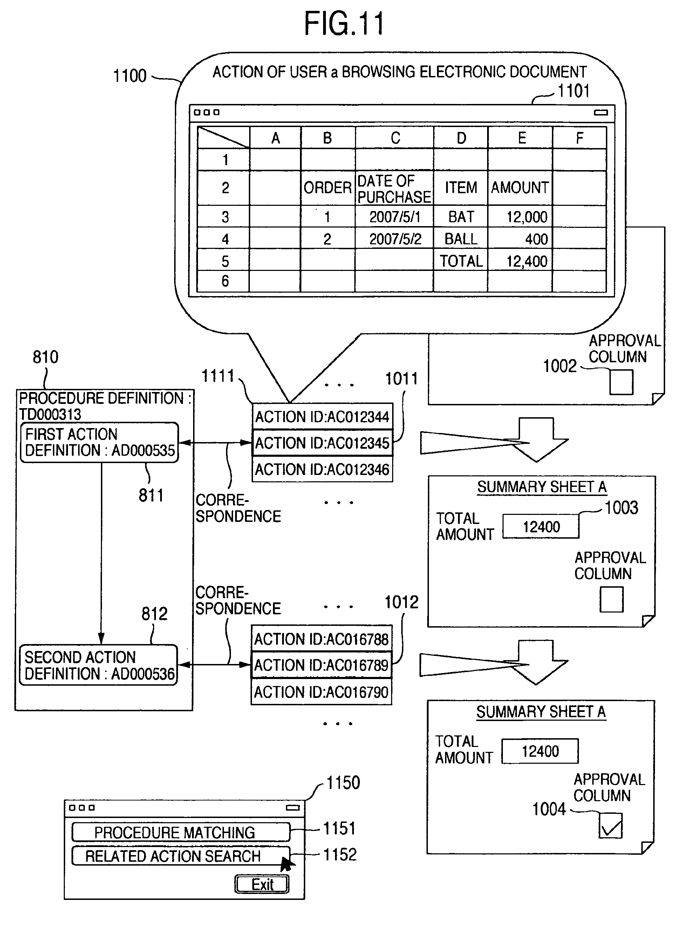

Further, Fig. 11 shows an example in which the totalizer conducts the totalization work using the spreadsheet software. The action 1111 of the totalizer for creating or updating the electronic document can be easily found by the worker in charge of the procedure flow confirmation by the related action candidate extraction method.

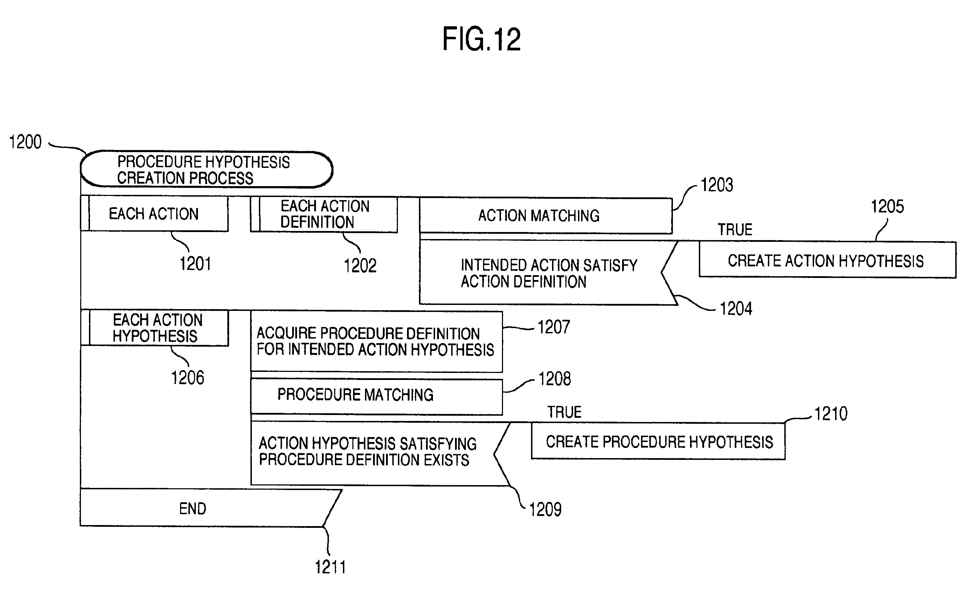

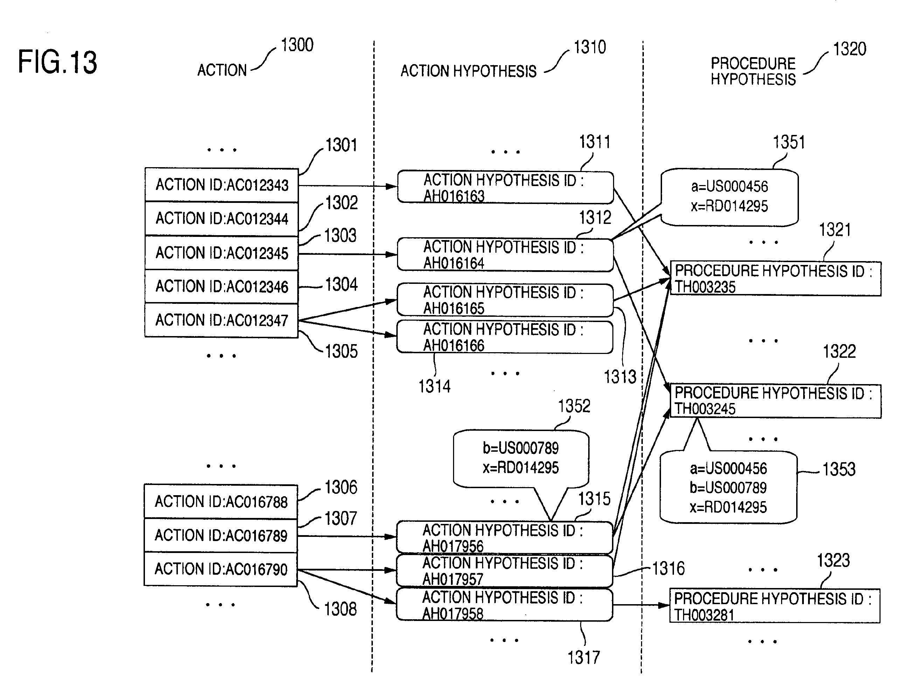

The process of creating the procedure hypothesis is explained in detail with reference to Figs. 12 and 13.

This embodiment employs the procedure hypothesis creation method using the bottom-up technique. This process is executed in the procedure matching part 102 of the action server 100. Specifically, an action hypothesis layer 1310 is first created from an action layer 1300 stored in the action information DB 206, and the resulting action hypothesis is stored in the hypothesis information DB 208. Further, the procedure hypothesis layer 1320 is created from the action hypothesis layer by a hierarchical process.

First, each action recorded in the action information 206 is matched with each condition of each action definition held in the procedure definition information DB 207 (steps 1201 to 1203). In the process, as long as the intended action satisfies the condition of a given action definition, the action hypothesis having the particular intended action and the action definition coupled with each other is created in the action hypothesis layer 1310 (steps 1204 to 1205; Ex. action hypotheses 1311 to 1317). At the same time, the value such as 1351 or 1352 is recorded in the item of the parameter value of each action hypothesis based on the actual action.

Next, with regard to each action hypothesis of the action hypothesis layer 1310, the procedure definition associated with the particular action hypothesis is acquired (steps 1206 to 1207). With regard to the procedure definition thus acquired, a set of the intended action hypotheses and other action hypothesis in the action hypothesis layer is searched for which satisfies the condition of the procedure definition (step 1208). In the presence of the action hypothesis set satisfying the condition of the procedure definition, the procedure hypothesis is created in the procedure hypothesis layer 1320 from the particular set (steps 1209 to 1210, Ex: 1321 to 1323). In the procedure matching of step 1208, each action hypothesis string satisfies each action definition in the procedure definition while at the same time selecting the consistent contents of the parameter value.

The process of creating the procedure hypothesis is described above. The procedure hypothesis thus created is registered in the hypothesis information DB 208.

Incidentally, the created procedure hypothesis may be accessed in such a manner that an interface is prepared in the terminal and upon depression of the "procedure matching" button 1151 in the dialogue shown in Fig. 11, the action relating to the procedure is displayed in highlight as shown by 1011, 1012 of Fig. 10. In the process, a certain length of time range may be set by the user.

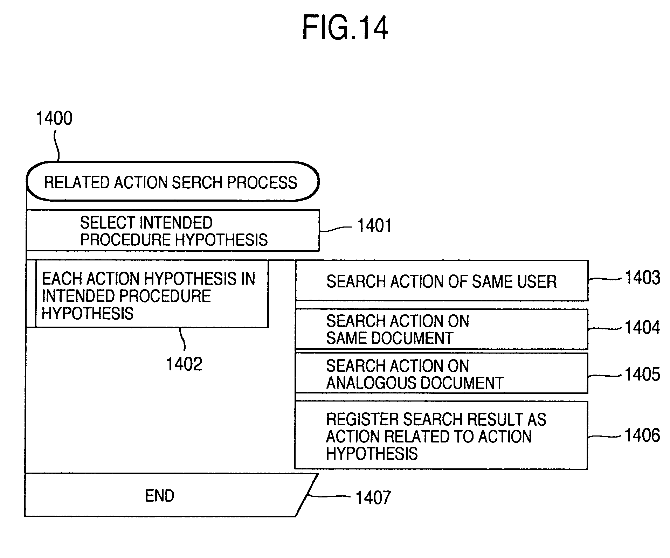

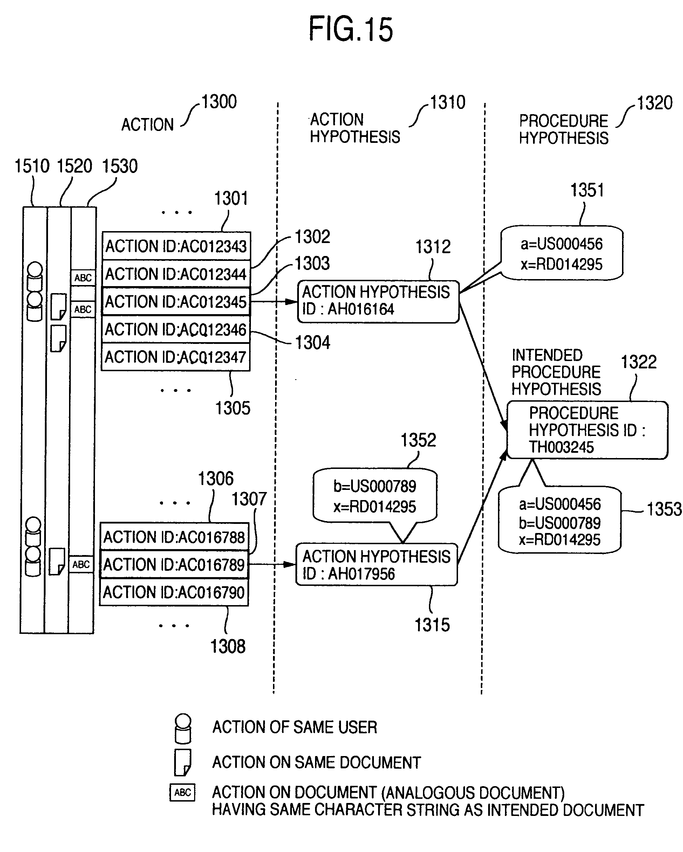

Next, the detail of the process of searching for the action related to the typical action making up a procedure is explained with reference to Figs. 14 and 15. This process is executed by the related action search part 103 of the action serve 101.

According to this embodiment, the process starts with step 1401 for selecting the procedure hypothesis considered by the user. For example, the related action may be registered in advance by executing this process sequentially for all the procedure hypothesis information held in the hypothesis information DB 208. Next, each action hypothesis in the intended procedure hypothesis is searched to determine whether it is the action of the same user as the action hypothesis, the action on the same document or the action on a document analogous to the document of the particular action hypothesis (steps 1402 to 1405). The search result thus obtained is registered as a related action of the action hypothesis (step 1406). These related actions searched for, if presented to the user in the form of an easy-to-understand flag designated by 1510 to 1530 in Fig. 15, help the user acquire the information on the intended related action. Assume that the data/action constituting the base of the action related to the action ID AC012345 (1303) is desired and that the same user as the original action browses the document including the same contents. Then, the action is probably a related action. By looking for the action having both flags for the same user and the analogous document in the vicinity of the action ID AC012345, therefore, the intended related action and the action ID AC012344 (1302; 1100 in Fig. 11) can be efficiently found.

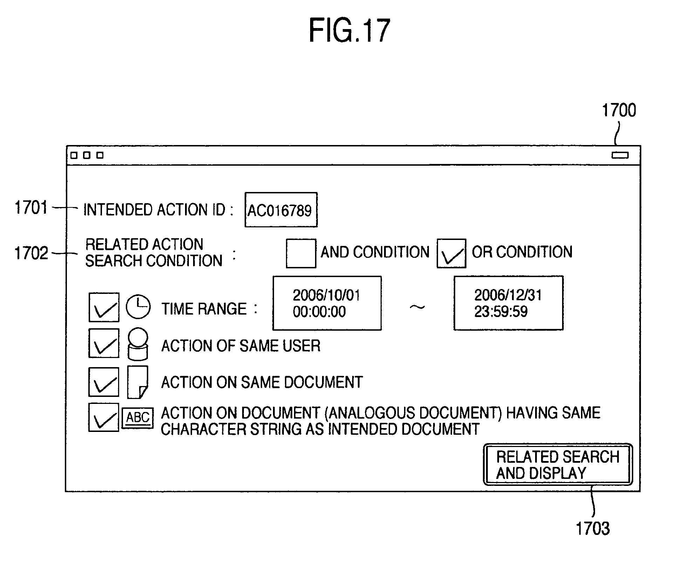

Further, by preparing the interface to search for a related action at the terminal, the user convenience can be improved. In the case where the action 1012 is selected on the terminal and the button 1152 "search related action" of the dialog 1150 shown in Fig. 11 is depressed, the related action search dialog 1700 of Fig. 17 is displayed. In this example, the action 1012 is selected before displaying the dialog, the action ID AC016789 of the action 1012 is automatically input into the frame 1701 of the intended action ID. In the case where the dialog is started without any selection, the user designates the search condition in the related action search condition 1702 of the procedure hypothesis. Thus, the related action search part of the action server searches the action information DB for a candidate for the related action desired by the user for investigation. As a result, the action related to the procedure and the electronic documents corresponding to the particular action such as 1111 and 1101 in Fig. 11 are displayed.

Now, the action search of the analogous document of step 1405 is explained in detail. This process is also executed by the related action search part. Various measures can be used for determining the analogy between documents. Assume the write action, for example. In the case of a key-punched or a handwritten character string, a method is available in which the character string of the character recognition result is used as a key word, and the document including the particular key word is regarded as an analogous document. In an alternative method, a feature character string is selected from the document of the intended action using the measure tf-idf for extracting the feature character string in the document, and other documents containing many of the character strings are determined as analogous documents. As another alternative method, in the case where the write action with pen is the underlining or encircling of a character string, the particular character string is extracted as a feature one, and other documents containing many of these character strings are regarded as analogous documents.

Incidentally, in the case where a great amount of action is accumulated in the action information DB 206 for the search process of the related action, it is actually desirable to limit the search range. At the time point when the user selects the intended procedure hypothesis in step 1401, for example, the search range is limited to the number of actions that can be displayed on the screen of Fig. 15, and upon subsequent receipt of an instruction to display the related action in another range from the user, the related action in such a range is searched. In this way, the processing speed is increased.

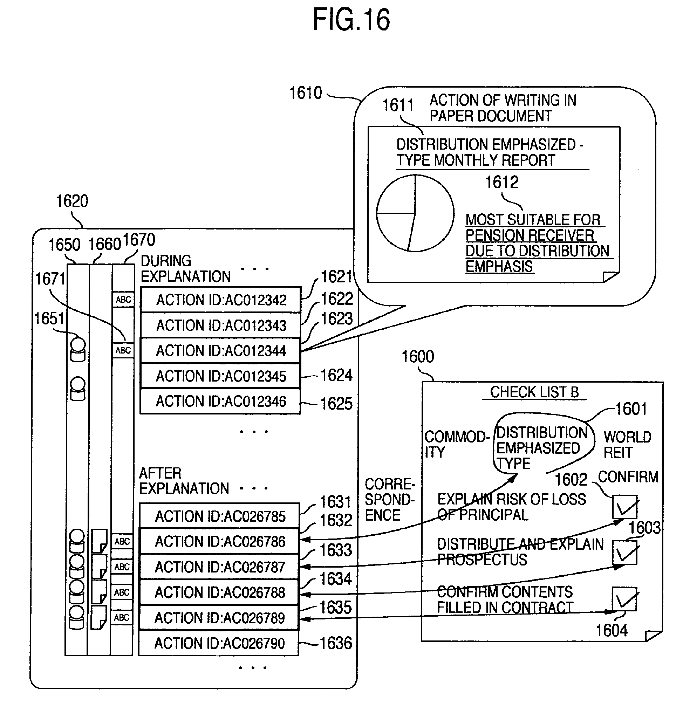

The sales procedure of a financial commodity is shown in Fig. 16 as an example of utilizing the search of the related action. Imagine a scene in which a sales person as a demonstrator sells the commodity to a customer and an analyzer browses the procedure record. In this case, assume that the selection and checking of the items 1601 to 1604 of the check list B1600 by the sales person are specified by the procedure definition and the action definition. Then, the actions 1632 to 1635 conducted by the sales person after the commodity demonstration is a typical action constituting the procedure. The search process of the related action explained above is executed by the related action search part of the action server to search for the action of the same user or the action on the analogous document, with the result that the related actions 1621, 1623, 1624 are obtained. At the terminal of the analyzer, as shown by 1620, these related actions are displayed in highlight. Especially, the related action 1623 is the action of the same user on an analogous document. This document is judged as an analogous document in view of the fact that it includes the same "distribution emphasis type" in the encircling 1601 and the title 1611. As a result, in the case where the analyzer reads this related action in detail and clicks the related action 1623 with the mouse of the terminal, for example, the paper document image with the handwriting as shown in 1610 is displayed on the terminal screen of the analyzer, and thus the write operation 1612 indicating the sales know how can be obtained. In this way, the correlation between even the temporally distant actions during and after demonstration can be visualized, thereby contributing to an improved user work efficiency.

It should be further understood by those skilled in the art that although the foregoing description has been made on embodiments of the invention, the invention is not limited thereto and various changes and modifications may be made without departing from the spirit of the invention and the scope of the appended claims, as interpreted by the description and drawings.

## Claims

1. An action management server (100) comprising:
an action information data base (206) for storing the information on the action conducted on a document;
a procedure definition data base (207) for storing, for each procedure, the action constituting a specified procedure;
an action definition data base for storing the information on the action constituting the procedure of the procedure definition data base;
a procedure matching part (102) for creating an action hypothesis on the action in the action information data base satisfying the definition based on the information stored in the action definition data base and creating the procedure hypothesis by extracting the procedure including the created action hypothesis from the procedure definition data base; and
a procedure hypothesis data base for storing the procedure hypothesis created by the procedure matching part.

2. The action management server according to Claim 1,
wherein the action definition data base has at least selected one of the user information, the action information and the information on an intended document for each action.

3. The action management server according to Claim 1, further comprising:
a related action search part (103) for receiving the selection from the procedure hypothesis stored in the procedure hypothesis data base, searching for at least selected one of the coincident user, the coincident document and the document analogous to the intended document for each action hypothesis constituting the selected procedure hypothesis, and registering the search result as a related action.

4. The action management server according to Claim 3,
wherein a document analogous to the intended document is searched in such a manner that a character string key-punched or handwritten on the document used in one action is determined as a key word to judge whether the key word is included in the other document.

5. The action management server according to Claim 3,
wherein a document analogous to the intended document is searched in such a manner that a key word is selected by the word importance degree calculated from the frequency of appearance of a word in the document used in one action and the number of the documents in which the word appears among the accumulated documents as a whole thereby to judge whether the the key word is included in the other document.

6. The action management server according to Claim 3,
wherein a document analogous to the intended document is searched in such a manner that the character string supported by being noted with pen in a document used in one action is determined as a key word thereby to judge whether the key word is included in the other document.

7. A search system for searching the information on the action conducted on a document, comprising:
an action information data base (206) for storing the information on the action conducted on a document;
a procedure definition data base (207) for storing, for each procedure, the action constituting a specified procedure;
an action definition data base for storing the information on the action constituting the procedure of the procedure definition data base;
a procedure matching part (102) for creating an action hypothesis on the action satisfying the definition based on the information stored in the action definition data base with regard to the action in the action information data base (206) and creating the procedure hypothesis by extracting the procedure including the created action hypothesis from the procedure definition data base;
a procedure hypothesis data base for storing the procedure hypothesis created by the procedure matching part (102);
an input means for inputting the action to be searched; and
an output means for extracting a procedure hypothesis including the action stored in the procedure hypothesis data base and input by the input means, the corresponding action hypothesis and the corresponding action, and outputting the procedure hypothesis, the action hypothesis and the corresponding action as the search result.

8. The search system according to Claim 7, further comprising:
a means for accepting the selection of the procedure hypothesis from the procedure hypothesis stored in the procedure hypothesis data base; and
a related action search part (103) for searching each action hypothesis constituting the selected procedure hypothesis selected for a related action including at least selected one of the coincident user, the coincident document and a document analogous to the intended document as a related action;
wherein the searched related action is displayed on the output means together with the search result.

9. The search system according to Claim 8,
wherein the searched related action is displayed in a form distinguishable from the other actions.

10. The search system according to Claim 8,
wherein the selection of the searched related action is accepted and displayed together with the document on the selected action.

11. An action management method for managing the action conducted on a document using a procedure definition data base (207) for storing, for each procedure, the action constituting a specified procedure and an action definition data base for storing the information on the action constituting the procedure of the procedure definition data base, the method comprising the steps of:
acquiring the information on the action conducted on a document;
creating an action hypothesis on the action satisfying the definition based on the information stored in the action definition data base with regard to the action in the action information data base and creating a procedure hypothesis by extracting the procedure including the created action hypothesis from the procedure definition data base; and
storing the created procedure hypothesis in the procedure hypothesis data base.

12. The action management method according to Claim 11, further comprising the steps of:
accepting the selection from the procedure hypothesis stored in the procedure hypothesis data base;
searching each action hypothesis constituting the selected procedure hypothesis for at least selected one of the coincident user, the coincident document and a document analogous to the intended document; and
registering the search result as a related action of the action hypothesis.

13. The action management method according to Claim 11, further comprising the steps of:
accepting the input of the action to be searched; and
extracting and outputting the procedure hypothesis including the action to be searched stored in the procedure hypothesis data base, the corresponding action hypothesis and the corresponding action.

14. The action management method according to Claim 13, further comprising the steps of:
accepting the selection of the procedure hypothesis from the procedure hypothesis stored in the procedure hypothesis data base;
searching each action hypothesis constituting the selected procedure hypothesis for at least selected one of the coincident user, the coincident document and a document analogous to the intended document as a related action; and
displaying the searched related action together with the search result.
